# EUROPEAN PATENT SPECIFICATION

(11) **EP 2 544 805 B1**
(45) Date of publication and mention of the grant of the patent: **23.09.2015**
(21) Application number: 11708956.5
(22) Date of filing: 08.03.2011
(51) Int. Cl.: B01F 1/00

(54) **SOLID CHEMICAL DISSOLVER AND METHODS**
LÖSUNGSMITTEL FÜR CHEMISCHE FESTKÖRPER UND VERFAHREN
DISSOLVEUR DE PRODUIT CHIMIQUE SOLIDE ET PROCÉDÉ

(30) Priority: 22.02.2011 US 201113031724; 08.03.2010 US 339702 P
(43) Date of publication of application: 16.01.2013
(73) Proprietor: Solenis Technologies Cayman, L.P., 8200 Schaffhausen (CH)
(72) Inventor: HAYAS, Matthew, S., Cincinnati OH 45255 (US); GRABOW, George, S., Powell OH 43065 (US); HOLT, Donald, A., Whitby ON L1N7L7 (CA); HAAS, Richard, E., Milford OH 45150 (US)
(74) Representative: Bülle, Jan
(86) International application number: PCT/US2011/027489
(87) International publication number: WO 2011/112542

(56) References cited:
- US-A1- 2005 244 315

## Description

### PRIORITY CLAIM

### FIELD OF THE INVENTION

This invention relates to an apparatus and a method for dissolving chemicals from a solid form to produce a chemical solution. More particularly, this invention relates to chemical dissolvers and methods for producing chemical solutions for water or process treatment from solid form chemicals.

### BACKGROUND OF THE INVENTION

It is known to provide concentrated chemical solution for introduction into liquid systems or processes for a variety of purposes. For example, chemical concentrates, including mixtures of different chemistries, are diluted to provide solutions for water treatment and prevention of scale and deposit accretion and buildup in tanks, boilers and cooling towers and in both open and closed water systems, for industrial cleaning, for detergent production in dishwashing systems and washing machines, for other cleaning and sanitizing purposes, and for continual and periodic cleaning and maintenance functions in a variety of applications.

Typically, a "dissolver" for dissolving or diluting a chemical is used to receive a chemical concentrate, dissolve or dilute it, and introduce the resulting solution to a system for treatment.

Specific disclosures of such prior apparatus and processes are found, for example, in United States Patents Nos. 2,371,720; 3,383,178; 3,595,438; 4,858,449; 4,964,185; 5,137,694; 6,441,073; 6,418,958; 6,820,661; in United States Patent Publication Nos. US2007/0269894 and US2010/0025338. Another prior art document is US 2005/0244315 A1, disclosing a method according to the preamble of claim 1 and an apparatus according to the preamble of claim 2, providing a device for producing a water treatment solution from a solid chemical block for distribution into a water system selected from the group comprising an institutional water system and an industrial water system. The device includes a housing to contain the solid chemical block. A fluid, preferably water at ambient temperature, is introduced into the housing to dissolve the block and form a liquid solution that may then be dispensed into either an institutional water system or an industrial water system. A method of dispensing the liquid solution with the device is also provided.

Moreover, it will be appreciated that systems for producing a concentrated chemical solution and for delivering that solution to a system for use are typically designed for specific applications due to the parameters of the system to be treated; all the way from washing machines on one hand to closed loop water tower and processes or building cooling systems on the other. Volumes, pressures, temperatures, water chemistries, chemical solutions required and many other parameters require significantly different dissolving and delivery systems.

Another consideration in this field is the state or form of the concentrated chemical used to form the treatment solution. Concentrated chemicals can be provided in either a concentrated liquid form or in a "solid" form. The term "solid" is herein used to differentiate or distinguish from other forms of chemical such as granules, flakes, beads, free flowing aggregates, particulates, powder and liquid. The terms "solid" and "solid chemical feed unit" as used herein are thus intended to refer to a monolithic mass in a freestanding, structural shape which may be formed by any suitable process including but not limited to compression, casting, molding and other processes. When dissolving a chemical in solid form, it is typical to spray a pattern of water onto the face of the solid chemical.

Comparisons of liquid to solid concentrated chemicals are set out in United States Patent Pub No. US2010/0025338.

When considering use of chemicals in solid form such as solid chemical feed units, particularly in the treatment of larger water systems such as heating and cooling systems, relatively larger amounts of concentrated chemical are required as compared to smaller volume systems. Regardless of the size of the solid chemical feed unit system, the feeding and dissolving process must be consistent so the chemical solution produced by the dissolving process is accurate and consistent.

Potentially interfering with these considerations is the nature of the interface of the solid chemical feed unit being dissolved by a water spray. While it is important to consistently dissolve chemical from the solid feed unit at a forward surface of that unit, it is also desirable to maintain chemical behind that surface as dry as possible to prevent such wetting and caking as would prevent consistent presentation of chemical at a location where the water spray most effectively and uniformly dissolves the chemical. Said in another way, if chemical in a solid feed unit behind the interface of the forward surface and the water spray becomes wet or cakes, feeding or movement of the solid chemical feed unit toward the spray interface can be adversely affected, as well as the surface of the solid chemical receiving the spray pattern. This can result in stoppages, in inconsistent solution production and in production of widely varying solution content adversely affecting the efficiency and viability of the treatment desired.

In another aspect of solid chemical feed unit dissolving, it is desirable that operator time and attendance at the dissolver be reduced, even while the dissolver must be capable of producing large amounts of chemical solution for large volume applications: This requires operable disposition of significant numbers of solid chemical feed units in the dissolver. While a plurality of such solid chemical feed units might be stacked, such as a small plurality of such solid chemical feed units in a much lower capacity dissolver (like four solid chemical feed units provided in a gallon-sized bucket), it is desired to provide apparatus and processes for handling much larger amounts of solid chemical feed units for much larger applications without the frequent operator attention required for 3,8 l (gallon) sized solid chemical feed unit fills in such larger units.

It is also desirable to provide solid chemical feed unit dissolvers facilitating use of multiple solid chemical feed units without damage from dropping solid chemical feed units one onto another, and without feeding or consistency issues arising from wetting or caking. For example, in some applications, it may be desirable to accommodate fills of about 22,7 to 90,7 kg (fifty to two hundred pounds) or so of total solid chemical feed unit weight where large volume systems are to be serviced. And it is desired to do so within a small dissolver footprint, but in a stable application.

Finally, it is desirable to provide the capability of observing the feed units in the dissolver as an indication of current status and the need to replenish the feed units for consistent treatment. Typical small capacity dissolvers do not provide such observation capacity.

### SUMMARY OF THE INVENTION

To these ends, the invention contemplates an improved solid chemical feed unit dissolver and solid chemical feed units combined to facilitate multiple solid chemical feed unit filling, provide high capacity dissolver operation, prevent undesirable feed unit caking and wetting, provide visual feed unit status and provide consistent sustainable chemical dissolving and solution for system treatment, all in a small footprint and from a stable dissolver.

A preferred embodiment of the invention contemplates a magazine sized and shaped to handle, preferably, a plurality of solid chemical feed units, in one form comprising disc-shaped feed units stacked vertically in the upper chamber of the magazine. A tapered sealing surface, smaller in diameter than the lower face of a disc-shaped feed unit, is preferably an integral part of the lower end of the magazine. The periphery of the lowermost feed unit rests on this surface, sealing the upstream chamber of the magazine from a spray directed upwardly through a screen and against the lower face of the lowermost feed unit to dissolve the solid chemical into a solution flowing downwardly and collected in a reservoir.

As the lower face of the feed unit is dissolved, the feed unit progressively feeds, downwardly toward the plane defined by the lower dissolving face thereof and its seal contact with the tapered surface.

Thus, as the solid chemical is dissolved by the spray at this lower face, that feed unit, and those above, move progressively downwardly, yet the upper chamber above the plane where the dissolving action occurs is sealed by the advancing chemical feed unit so the upper chamber and feed units therein are retained in a relatively drier area and do not mat, clog or otherwise adversely affect the accurate and consistent dissolving of the chemical at the lower face of the lowermost feed unit.

The magazine can be provided with access slots to facilitate gentle handling of the feed units which are loaded into the magazine, and with visual access therein to permit an operator to determine the load status of the magazine.

These and other advantages and modifications of the invention will become readily apparent from the following written description and from the drawings in which:

### BRIEF DESCRIPTION OF THE DRAWINGS

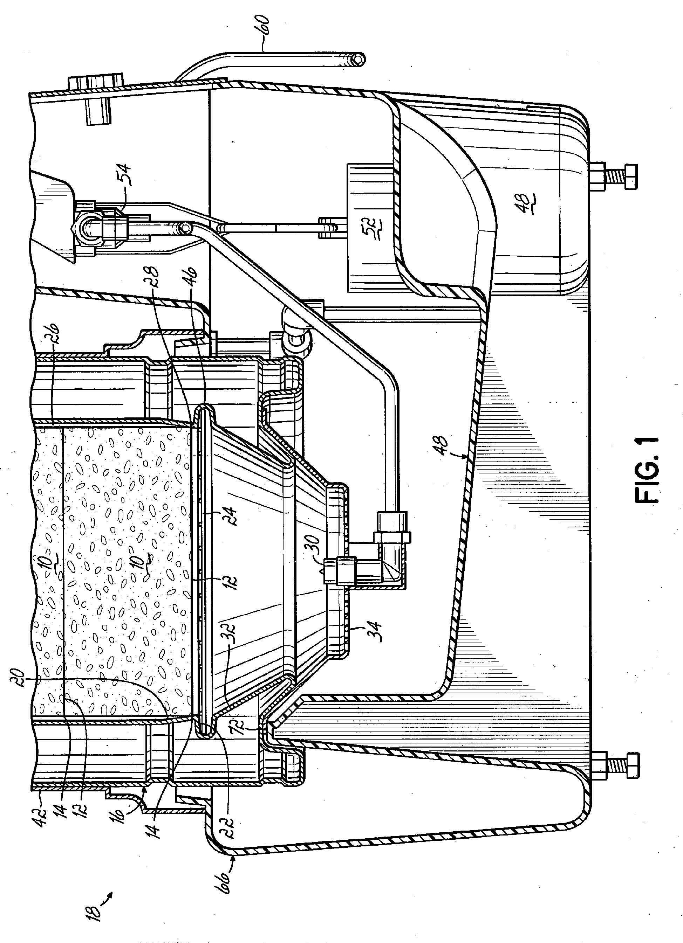

FIG. 1 is an illustrative cross-sectional view showing a dissolver with feed unit magazine mounted thereon and showing the lower end of the magazine where the inwardly tapering surface forms a seal with the lower edge of the lowermost solid chemical feed unit;

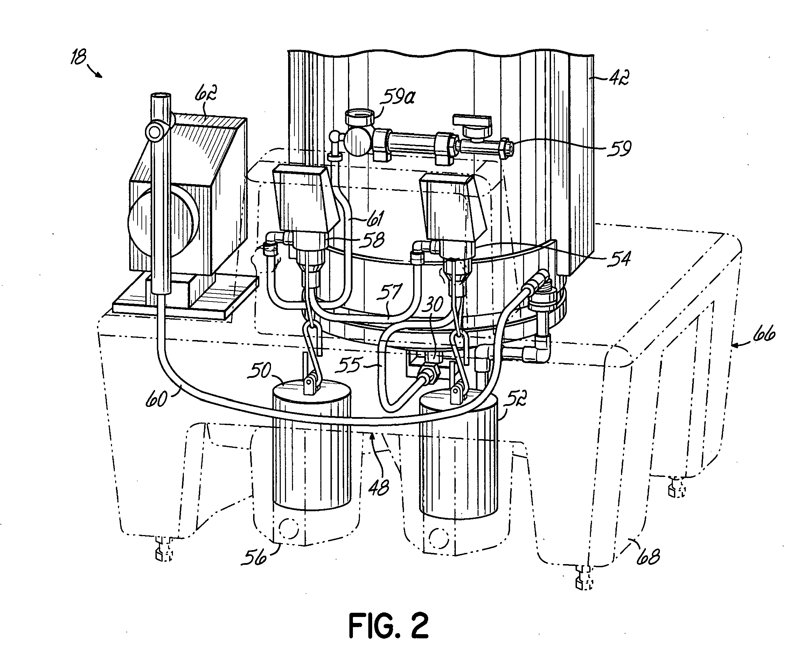

FIG. 2 is an isometric view of a dissolver and magazine as in FIG. 1 wherein selected components are shown in transparent format for clarity and explanation;
FIG. 3 is a perspective view of a dissolver and magazine of FIG. 1, illustrating an uncovered magazine, filled with solid chemical feed units;
FIG. 4 is an elevational view of the dissolver and covered magazine of FIG. 1, with solid chemical feed units visible through a magazine slot and cover sight window;

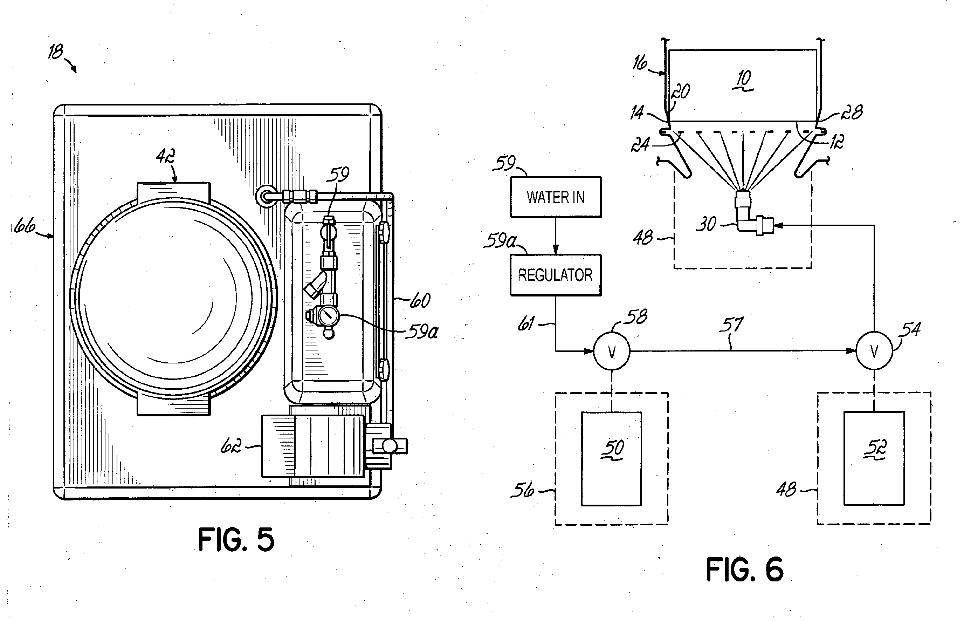

FIG. 5 is a top plan view of a dissolver and magazine; and
FIG. 6 is a schematic flowchart showing flow of regulated water from the regulator to the serially connected second and first valves to the spray nozzle, and also illustrating diagrammatically the overflow tank and the solution reservoir (depicted in two places), as well as the solid chemical feed unit, tapered sealing surface and screen.

### DETAILED DESCRIPTION OF THE INVENTION

Preferably as used herein, the term "dissolver" includes a solid chemical feed unit dissolving apparatus and an associated operatively mounted solid chemical feed unit magazine or guide for holding and introducing successive solid chemical feed units sequentially to a dissolving location or station in the dissolver.

As illustrated in the drawings, preferred solid chemical feed units useful in the invention are in the form of a cylinder or disc 10 having a forward face 12 defined by a circular edge 14. Disc 10 has predetermined height and is preferably, but not necessarily, from 0,15 to 0,23 m (six to nine inches) in diameter, about 0,03 to 0,15 m (one to six inches) in height and preferably 0,08 m (three inches) high. Preferably, the forward face 12 is about 0,01 to 0,07 m² (20 square inches to 110 square inches) in surface area. Preferably, a single solid chemical feed unit weighs in the range of 3,63 m to 4,54 kg (eight to ten pounds). These parameters are illustrative only; other sizes, areas and weights could be used.

One embodiment of the invention comprises a unique solid chemical feed unit magazine 16 in operable cooperation as part of a dissolver apparatus 18 wherein the magazine 16 has a slight inwardly tapered surface or constriction 20 at a lower magazine end 22, just upstream or above a first screen 24. As noted, a solid chemical feed unit 10 is preferably, but not exclusively, cylindrical in shape, with a lower circular face surface 12 defined by an edge 14 engaging the tapered surface 20 of the magazine 16 and sealing off upper chamber areas 26 of the magazine above the seal 28 produced by the engagement of the lower feed unit edge 14 with the tapered surface 20.

Alternately, the tapered surface 20 may be operatively disposed in the dissolver 18 at a seal location downstream of the magazine 16, while providing a seal against moisture intrusion into the magazine 16 and above the face surface 12 of a feed unit 10 being dissolved.

The upper first screen 24 is disposed in the magazine 16 proximate the so-formed seal 28 and just below the lower face 12 of the forward or lowermost solid chemical feed unit 10. The first screen 24 is of any suitable construction and preferably of stainless steel wire in No. 2 mesh, i.e. 0,013 m (one-half inch) mesh. An upwardly directed nozzle 30 is disposed below the screen 24. The nozzle 30 sprays a consistent and preferably uniform water pattern up through the screen onto the lower circular face 12 of the solid chemical feed unit 10, which is thus dissolved. As the solid chemical feed unit 10 is so dissolved, dissolved chemical drops toward and through the first screen 24 onto a collection funnel 32 or tapered collecting surface thereof, yet all the while its advancing lower face 12 at its circular edge 14 seals against the tapered surface 20, preventing wetting and caking of the solid chemical feed unit or units 10 above the dissolving face 12. The solid chemical feed unit 10 and successive solid chemical feed units descend in the magazine 16 toward the tapered surface 20 and seal as the nozzle 30 continues to spray, maintaining both the seal 28 and the presentation of a feed unit surface for dissolving by the nozzle 30 spray. The seal 28 is maintained whether the nozzle spray 30 produces continuously or intermittently,

As the face 12 of the solid chemical feed unit 10 is sprayed and dissolved by the water, diluted chemical solution falls past the nozzle onto a secondary, lower screen 34 at the bottom of funnel 32 for catching any lumps or pieces of undissolved chemicals falling through the first screen 24 and which are collected and optionally presented to waste. The lower screen 34 is preferably an integral part or floor of the collection funnel 32 with a plurality of 0,006 m (one-quarter inch) holes therein, whereby pieces of undissolved chemical are captured in the floor and can be further dissolved.

Thus, it will be appreciated that the magazine 16 defines an upper feed unit chamber 26 for accepting a plurality of solid chemical feed units 10 in tandem and for feeding each unit 10 serially toward the tapering surface 20, forming a seal 28 with the edge 14 of the lowermost feed unit.

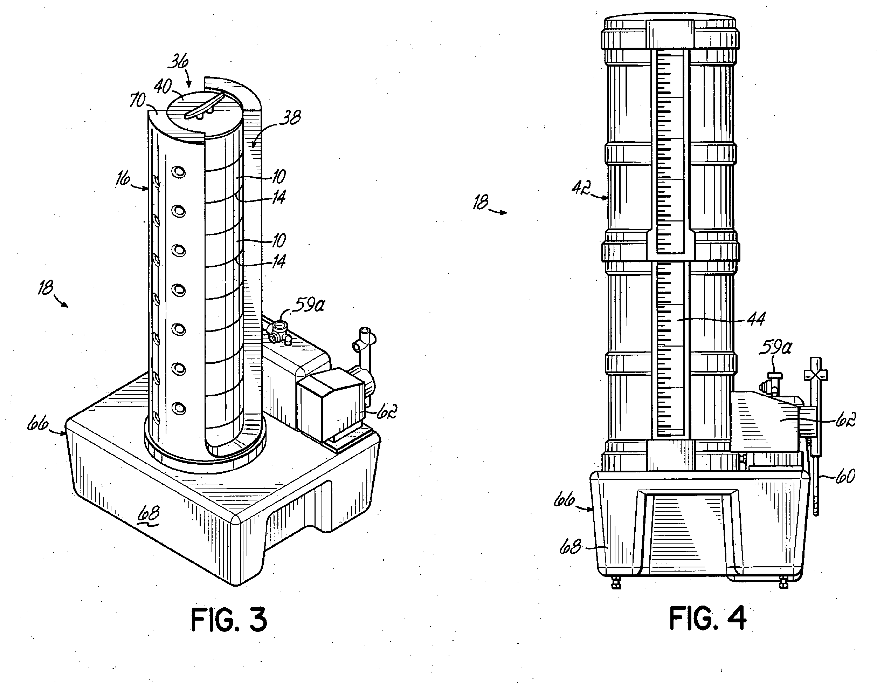

In a preferred embodiment of the invention, the magazine 16 defines two elongated slots 36, 38 (FIG. 3) on opposite sides thereof. Cylindrically-shaped solid chemical feed units 10 are manually lowered within the magazine 16 and from the top by physical support facilitated by the slots 36, 38, until the feed units 10 are settled on the seal 28 or on the proceeding feed unit 10. A guide cover 40 is placed on the last or uppermost feed unit 10 and follows the units 10 downwardly as they are successively dissolved. If the last unit in the magazine is fully dissolved, the guide cover 40 deflects any spray from the nozzle 30 from entering the magazine chamber 26 through the screen; it too sealing or contacting the tapering seal surface 20.

A magazine cover 42 may be disposed over the magazine 16. This cover 42 is preferably provided with an elongated sight window 44 with measuring scale aligned with one of said slots 36, 38 and through which the feed units 10 therein can be viewed and measured as an indication of solid chemical feed unit status and any need to load more solid chemical feed units 10. It is thus easy for an operator to assure continued operation of a treatment process by visual observation.

Just below the tapered surface 20 of the magazine, 16 a circular groove 46 in a surface of either the magazine 16 or other dissolver parts accommodates, supports or positions the periphery of the circular screen 24 noted above. The further tapered surface below the screen in the form of a collection funnel 32 funnels chemical solution downwardly to a collection area or reservoir 48 within the dissolver 18 wherein one or more floats 50, 52 are disposed to control water flow through line 55 to the nozzle 30 based on the fill condition of a solution reservoir 48. Primary chemical solution is directed to a solution reservoir 48 in which a float 52 activates a first valve 54 when the reservoir 48 is filled, shutting off water to the nozzle 30. If that reservoir 48 has overflowed into an overflow tank 56 despite the condition of the first valve 54 and its float 52, a second float 50 in the overflow tank 56 shuts a second valve 58, serially connected to the first valve 54 (through conduit 57) from upstream thereof, as a failsafe to shut off water from water inlet 59, pressure regulator 59a and conduit 61, to the first valve 54, line 55 and nozzle 30 and to stop nozzle 30 spray onto a feed unit 10. The supply of water to the serially-connected valves 54, 58 and nozzle 30 is pressure regulated to produce a consistent spray from the nozzle 30.

A pick-up tube 60 transfers chemical solution to an outlet pump 62 from the solution reservoir 58 for transport to a water system or other process stream.

Also, it will be appreciated that the invention is useful in multiple applications where available water pressures might vary significantly from one application to the other and in the approximate range of 1,72 to 6,90 bar (25 to 100 psi) and more likely 1,72 to 2,76 bar (25-40 psi). The water supply nozzle 30 is regulated to about 1,72 bar (25 psi) (regulator 59a) and at this pressure, the nozzle 30 delivers water diluent in a spray pattern to the face of the solid chemical feed unit at a rate of about 1,90 l (5 gallons)per minute to produce a chemical solution at about .5% to about 1.0% concentration.

Preferably, and to provide consistent chemical solution by presenting a continually uniform solid chemical feed unit face 12 and surface area defined at the forward face, each solid chemical feed unit 10 has a shape such that surface area of the solid chemical feed unit is positioned at a constant distance from the nozzle 30 at the first screen 24. Provision of a uniform water pattern, emanating from a nozzle 30 at a uniform distance from the face of the operative solid chemical feed unit, and at a uniform low pressure facilitates a consistent, accurate and constant solution and treatment process.

It will also be appreciated that the dissolver 18 provides a very high capacity solid chemical feed unit dissolving process but in a relatively small footprint. Essentially, the dissolver unit 18 at its lower end is about 0,61 m (24 inches) wide by 0,71 m (28 inches) long and about one foot tall, or alternately, it could be other sizes, such as 0,46 m (18 inches) wide and about 0,56 m (22 inches) long. The housing 66 forms preferably integral both reservoir 48 and overflow tanks 56 of about one quart capacity each, and an additional containment tank 68 beyond these two tanks to accommodate an unexpected spill or malfunction. The magazine has an upper loading end 70, about 1,52 m (five feet) from the bottom of the dissolver housing 66, and is about 0,33 m (thirteen inches)in diameter, with cover 42. The lower end of the magazine is secured to the dissolver housing 66 so it does not separate if the entire apparatus is tipped. Since the lower end of the magazine 16 is disposed within the housing 66, the center of gravity of the unity is relatively low and the dissolver is stable. For example, magazine 16 may be supported by an integral seat 72 of housing 66, and other portions of the housing 66 and may be otherwise suitably fastened to the housing.

It will thus be appreciated that the dissolver 18 is partially defined by a housing 66 or body which usefully comprises a molded housing 66 of any suitable material defining a solution reservoir 48, an overflow tank 56, a containment tank 68, a seat 72 for a magazine and such conduits, valves 54, 58 nozzle 30 and the like to perform the dissolving function. The reservoir 48 and overflow tank 56 may be an integrally formed portion of the dissolver body 66. As will be appreciated, the magazine 16 is removably but securely seated on the dissolver 18 as shown in the drawings. The tapered sealing surface 20 and screen 24 could be formed in the dissolver 18, below a magazine 16, if desired, as opposed to the preferred disposition as part of the magazine 16.

In an alternate embodiment, the solid chemical feed units 10 may be provided in other shapes than cylinders or discs. For example, a disc shape with a sector removed, a unit in the form of a multiple-sided shape of curved or straight lines, or a variety of other feed unit shapes could be used. Consequently, the tapering seal surface 20 may also be provided in similar and cooperating configurations to produce the seal 28 with the solid chemical feed unit 10 discussed herein and to prevent moisture transport or migration beyond a spray-receiving dissolving face 12 of such a feed unit.

The parameters of a uniform pattern consistent with the shape of the solid chemical feed unit face 12, uniform distance from spray nozzle 30 to that face, and uniform water pressure are all preferably provided and retained.

These embodiments facilitate treatment of a variety of process streams from solid chemical feed units.

From the foregoing, it will be appreciated that the invention provides a solid form chemical dissolver having a unique high capacity magazine and solid chemical feed units and which prevents dissolving process obstruction from wetting or caking of subsequent solid chemical feed units as well as provides consistent chemical dissolving, either continuously or intermittently, and resulting accurate solutions for system treatments. These benefits are attained in addition to such improved apparatus and methods as a result from a dissolver of small footprint, providing high capacity in a yet stable unit with accurate solution production and decreased operator time and attention.

A variety of solid chemicals provided in solid chemical feed units can be used with this invention. These include, by way of example only, and without limitation: phosphonate; tolytriazole; molybdate; polymers; caustics; sulfite and nitrate.

These and other advantages and modifications will become readily apparent to those of ordinary skill in the art.

## Claims

1. A method of dissolving a solid chemical feed unit (10) in a solid chemical feed unit dissolver (18) having a solid chemical feed unit chamber (26) including an inwardly tapered surface (20) proximate one end thereof, including the steps of:
introducing a solid chemical feed unit (10) in said chamber;
creating a seal (28) at a seal location between said solid chemical feed unit and said tapered surface (20) when an edge of said solid chemical feed unit (10) engages said surface (20);
and spraying a diluent onto a face of said solid chemical feed unit (10) defined by said edge,
advancing said solid chemical feed unit (10) toward said seal location while spraying said face and dissolving said solid chemical feed unit, and while retaining the seal (28) between said solid chemical feed unit (10) and said tapered surface (20),
**characterised in that** dissolved chemicals drop towards and through a screen (24) onto a collecting funnel (32) and
that a diluted chemical solution falls past a nozzle onto a lower screen (34) at the bottom of the funnel (32) for catching any lumps or pieces of undissolved chemicals falling through the screen (24).

2. Apparatus for dissolving solid chemical feed units (10) to form a chemical solution and including:
a dissolver (18) having a spray nozzle (30);
a tapered sealing surface (20) operably disposed for receiving a solid chemical feed unit (10) in sealing relation at a seal location;
a screen (24); said spray nozzle (30) disposed on an opposite side of said screen (24) from said seal location;
a reservoir (58) for receiving dissolved chemical solution, **characterized in that** the apparatus further comprises a collecting tunnel (32) comprising a lower screen (34) at the bottom thereof,
wherein the apparatus is configured such that dissolved chemicals drop towards and through the screen (24) onto the collecting funnel (32) and that a diluted chemical solution falls past the spray nozzle (30) onto the lower screen (34) at the bottom of the funnel (32) for catching any lumps or pieces of undissolved chemicals falling through the screen (24).

3. Apparatus as in claim 2 further including a solid chemical feed unit magazine (16) defining said chamber (26).

4. Apparatus as in claim 3 wherein said tapered sealing surface (20) is defined by said magazine (16).

5. Apparatus as in claim 3 wherein said magazine (16) includes at least two elongated slots (36, 38) in sides thereof.

6. Apparatus as in claim 5 further including a magazine cover having a visual sight window (44) aligned with one of said slots (36, 38) and through which solid chemical feed units (10) in said magazine can be observed from outside thereof and through said one slot.

7. Apparatus as in claim 2 further including, in combination with said dissolving apparatus, at least one solid chemical feed unit (10) sealed to said dissolver (18) at a face of said solid chemical feed unit (10).

## Patentansprüche

1. Ein Verfahren zum Lösen einer festen Chemikalienzugabeeinheit (10) in einem Auflöser für feste Chemikalienzugabeeinheiten (18), der eine Kammer für feste Chemikalienzugabeeinheiten aufweist (26), einschließlich einer nach innen verjüngten Oberfläche (20), die annähernd an einem Ende angeordnet ist, umfassend die Schritte:
Einführen einer festen Chemikalienzugabeeinheit (10) in die Kammer;
Erzeugen einer Dichtung (28) an einer Dichtstelle zwischen der festen Chemikalienzugabeeinheit und der verjüngten Oberfläche (20), wenn ein Rand der festen Chemikalienzugabeeinheit (10) in die Oberfläche (20) eingreift;
und Sprühen eines Verdünnungsmittels auf eine Fläche der festen Chemikalienzugabeeinheit (10), die durch den Rand vorgegeben wird,
Vorrücken der festen Chemikalienzugabeeinheit (10) in Richtung der Dichtstelle unter Sprühen der Fläche und Lösen der festen Chemikalienzugabeeinheit, während die Dichtung (28) zwischen der festen Chemikalienzugabeeinheit (10) und der verjüngten Oberfläche (20) aufrechterhalten wird,
**dadurch gekennzeichnet, dass** gelöste Chemikalien in Richtung eines Siebs (24) und durch dieses Sieb auf einen Auffangtrichter (32) fallen und
dass eine verdünnte chemische Lösung unterhalb einer Düse auf ein unteres Sieb (34) fällt, das sich am Boden des Trichters (32) befindet, um jede Klumpen oder jede Stücke von ungelösten Chemikalien aufzufangen, die durch das Sieb (24) fallen.

2. Eine Vorrichtung zum Lösen von festen Chemikalienzugabeeinheiten (10), um eine chemische Lösung zu bilden, umfassend:
einen Auflöser (18), der eine Sprühdüse (30) aufweist;
eine sich verjüngende Dichtungsoberfläche (20), die wirksam angeordnet ist, um eine feste Chemikalienzugabeeinheit (10) unter Dichtverbindung an einer Dichtstelle aufzunehmen;
ein Sieb (24); die Sprühdüse (30), die auf der gegenüberliegenden Seite des Siebs (24) aus der Position der Dichtstelle angeordnet ist;
einen Behälter (58), um die aufgelöste chemische Lösung aufzunehmen;
**dadurch gekennzeichnet, dass** die Vorrichtung weiterhin einen Auffangtrichter (32) aufweist, der ein unteres Sieb (34) an dessen Boden umfasst,
wobei die Vorrichtung so ausgelegt ist, dass gelöste Chemikalien in Richtung auf das Sieb und durch das Sieb (24) auf den Auffangtrichter (32) fallen, und dass eine verdünnte chemische Lösung durch die Sprühdüse (30) auf das untere Sieb (34) am Grund des Trichters (32) fällt, um jede Klumpen oder jede Stücke von ungelösten Chemikalien aufzufangen, die durch das Sieb (24) fallen.

3. Eine Vorrichtung, wie in Anspruch 2 beansprucht, die weiterhin ein Magazin für die feste Chemikalienzugabeeinheit (16) umfasst, das die Kammer (26) festlegt.

4. Eine Vorrichtung, wie in Anspruch 3 beansprucht, wobei die sich verjüngende Dichtungsoberfläche (20) durch das Magazin (16) vorgegeben wird.

5. Eine Vorrichtung, wie in Anspruch 3 beansprucht, wobei das Magazin (16) wenigstens zwei Längsschlitze (36, 38) in dessen Seiten einschließt.

6. Eine Vorrichtung, wie in Anspruch 5 beansprucht, die weiterhin eine Magazinabdeckung umfasst, die ein optisches Sichtfenster (44) aufweist, das mit einem der Längsschlitze (36, 38) fluchtet und durch das die festen Chemikalienzugabeeinheiten (10) in dem Magazin von außerhalb und durch diesen Längsschlitz beobachtet werden können.

7. Eine Vorrichtung, wie in Anspruch 2 beansprucht, die weiterhin in Verbindung mit der Auflösevorrichtung wenigstens eine feste Chemikalienzugabeeinheit (10) aufweist, die mit dem Auflöser (18) an einer Fläche der festen Chemikalienzugabeeinheit (10) versiegelt ist.

## Revendications

1. Procédé de dissolution d'une dose d'alimentation de produits chimiques solides (10) dans un dissolveur (18) de dose d'alimentation de produits chimiques solides ayant une chambre (26) de dose d'alimentation de produits chimiques solides comportant une surface se rétrécissant vers l'intérieur (20) à proximité d'une extrémité de celle-ci, comportant les étapes suivantes :
l'introduction d'une dose d'alimentation de produits chimiques solides (10) dans ladite chambre ;
la création d'un joint (28) au niveau d'un emplacement de joint entre ladite dose d'alimentation de produits chimiques solides et
ladite surface se rétrécissant (20) lorsqu'un bord de ladite dose d'alimentation de produits chimiques solides (10) vient en contact avec ladite surface (20) ;
la pulvérisation d'un dissolvant sur une face de ladite dose d'alimentation de produits chimiques solides (10) définie par ledit bord,
l'avance de ladite dose d'alimentation de produits chimiques solides (10) vers ledit emplacement de joint tout en pulvérisant ladite face et en dissolvant ladite dose d'alimentation de produits chimiques solides et en retenant le joint (28) entre ladite dose d'alimentation de produits chimiques solides (10) et ladite surface se rétrécissant (20),
**caractérisé en ce que**
les produits chimiques dissous tombent vers et à travers un filtre (24) jusque sur un entonnoir de collecte (32) et
une solution chimique diluée tombe devant une buse jusque sur un filtre inférieur (34) au fond de l'entonnoir (32) pour récupérer les grumeaux ou morceaux éventuels de produits chimiques non dissous tombant à travers le filtre (24).

2. Appareil pour dissoudre des doses d'alimentation de produits chimiques solides (10) pour former une solution chimique, comportant :
un dissolveur (18) ayant une buse de pulvérisation (30) ;
une surface d'étanchéité se rétrécissant (20) disposée de manière fonctionnelle de façon à recevoir une dose d'alimentation de produits chimiques solides (10) en relation d'étanchéité au niveau d'un emplacement de joint ;
un filtre (24) ; ladite buse de pulvérisation (30) étant disposée sur un côté opposé dudit filtre (24) par rapport audit emplacement de joint ;
un réservoir (58) pour recevoir la solution chimique dissoute,
**caractérisé en ce que** l'appareil comprend en outre un entonnoir de collecte (32) comprenant un filtre inférieur (34) au fond de celui-ci,
l'appareil étant configuré de telle sorte que les produits chimiques dissous tombent vers et à travers le filtre (24) jusque sur l'entonnoir de collecte (32) et qu'une solution chimique diluée tombe devant la buse de pulvérisation (32) jusque sur le filtre inférieur (34) au fond de l'entonnoir (30) pour récupérer les grumeaux ou morceaux éventuels de produits chimiques non dissous tombant à travers le filtre (24).

3. Appareil selon la revendication 2, comportant en outre un magasin (16) de doses d'alimentation de produits chimiques solides définissant ladite chambre (26).

4. Appareil selon la revendication 3, dans lequel ladite surface d'étanchéité se rétrécissant (20) est définie par ledit magasin (16).

5. Appareil selon la revendication 3, dans lequel ledit magasin (16) comporte au moins deux fentes allongées (36, 38) dans des côtés de celui-ci.

6. Appareil selon la revendication 5, comportant en outre un couvercle de magasin ayant une fenêtre d'observation (44) alignée avec l'une desdites fentes (36, 38) et à travers laquelle des doses d'alimentation de produits chimiques solides (10) dans ledit magasin peuvent être observées depuis l'extérieur de celui-ci et à travers ladite une fente.

7. Appareil selon la revendication 2, comportant en outre, en combinaison avec ledit appareil dissolvant, au moins une dose d'alimentation de produits chimiques solides (10) scellée hermétiquement audit dissolveur (18) au niveau d'une face de ladite dose d'alimentation de produits chimiques solides (10).
